# EUROPEAN PATENT SPECIFICATION

(11) **EP 0 772 149 B1**
(45) Date of publication and mention of the grant of the patent: **11.12.2002**
(21) Application number: 96307835.7
(22) Date of filing: 30.10.1996
(51) Int. Cl.: G06K 11/18

(54) **Stylus pen and coordinate reading system using the same**
Stift und diesen verwendendes Koordinatenablesesystem
Crayon et système de lecture de coordonnées l'utilisant

(30) Priority: 01.11.1995 JP 28534095
(43) Date of publication of application: 07.05.1997
(73) Proprietor: Seiko Instruments Information Devices Inc., Chiba-shi, Chiba (JP)
(72) Inventor: Morita, Yoshiyuki, c/o Seiko Inst. Info. Dev. Inc., Mihama-ku, Chiba-shi, Chiba (JP)
(74) Representative: Sturt, Clifford Mark

(56) References cited:
- EP-A- 0 283 250
- EP-A- 0 591 083
- EP-A- 0 722 150
- FR-A- 2 584 836
- PATENT ABSTRACTS OF JAPAN vol. 013, no. 108 (P-843), 15 March 1989 & JP 63 286924 A (AMADA METRECS CO LTD), 24 November 1988,

## Description

The present invention relates to a coordinate reading device for inputting positional data to an electronic device such as a computer. More particularly, the invention concerns a stylus pen which is used in a coordinate reading device in order to indicate a reading position.

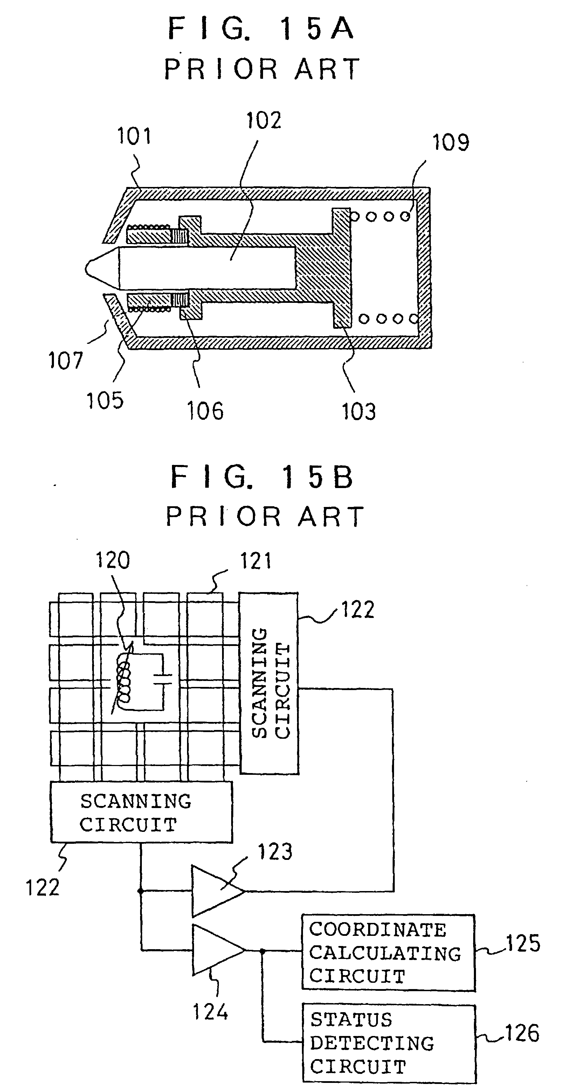

As a conventional stylus pen there is known that illustrated in Fig. 15(A). In this figure, a fixed core 105 is made of a ferromagnetic body such as ferrite and has a coil 107 wound therearound and is fixed to a forward end portion of a pen shaft 101. The fixed core 105 has a through hole formed therein in its axial direction and a ball pen unit 102 passes therethrough. This ball pen unit 102 has its rear end detachably fixed to a writing pressure transmission member 103. The writing pressure transmission member 103 is urged by a spring 109 toward the pen tip and is thereby slidably supported. On the surface of the writing pressure transmission member 103 in contact with the fixed core 105 there is provided a movable core 106 that is made of a ferromagnetic body as in the case of the fixed core 105. As illustrated in Fig. 15(B), a capacitor is connected in parallel with the coil 107 to thereby constitute a resonance circuit 120.

In the above-constructed stylus pen, in a state where no force is applied to the pen tip of the ball pen unit 102, the movable core 106 is in a state of being caused to cohere onto the fixed core 105 by the spring 109, with the result that the coil 107 has an initial inductance value. Next, when pushing the pen tip of the ball pen unit 102 in the axial direction, that is, when a writing pressure is applied thereto, the spring 109 is compressed whereby the writing pressure transmission member 103 is displaced toward a rear end of the pen shaft and as a result the movable core 106 is also displaced in such a direction as to part away from the fixed core 105 For this reason, the inductance of the coil 107 varies so as to become small. Accordingly, in this stylus pen, it is arranged for the inductance of the coil provided therewithin to vary due to the writing pressure.

This stylus pen is used to indicate a reading position in a coordinate reading device illustrated in a block diagram of Fig. 15(B). A number of sense lines 121 are connected to each of scanning circuits 122 and it is arranged that these sense lines in each of X and Y directions are selected sequentially in units of a single sense line. The X-direction scanning circuit and the Y-direction scanning circuit are connected to an input and output of a first amplifier 123 respectively. It is to be noted here that when the resonance circuit 120 built in the stylus pen is placed in a zone where a selected X-direction sense line and a selected Y-direction sense line intersect each other, there is formed a loop circuit having a path of X-direction sense line - first amplifier 123 - Y-direction sense line -resonance circuit 120 by electromagnetic coupling that results from the use of the resonance circuit 120. Therefore, if the transmission characteristic of this path is designed suitably, it is possible to generate an oscillation signal. The oscillation intensity at this time depends on the distance between the sense line 121 and the resonance circuit 120. Also, the oscillation frequency becomes the resonance frequency of the resonance circuit 120. Since the coil 107 that constitutes the resonance circuit 120 is arranged to have its inductance varied due to the writing pressure that results from the push of the forward end of the ball pen unit as mentioned above, it results from this that the oscillation frequency varies depending on the writing pressure. This oscillation signal is amplified by a second amplifier 124 and is supplied to a coordinate calculating circuit 125 to thereby calculate an indicated coordinate from the distribution of the oscillation intensity that is obtained as a result of the scanning operation. Also, a status detecting circuit 126 detects from the oscillation frequency the writing pressure that is applied to the stylus pen. The writing pressure may be detected as "on"/"off" data by being compared with a threshold value. The writing pressure, or switch data such as "on"/"off" data is called "a status" in the following description.

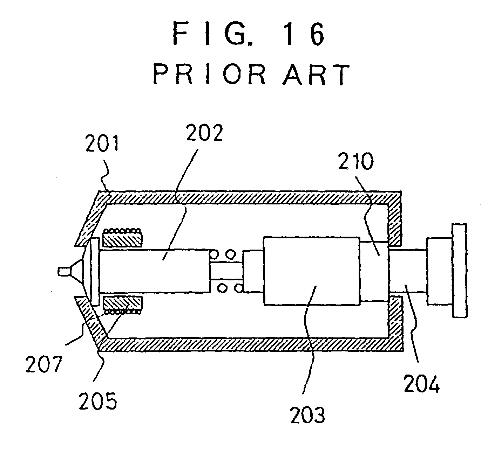

As another stylus pen, there is known that which has a mechanical pencil type "sharp pen" built therein as illustrated in Fig. 16. A "sharp pen' unit 202 is the one which is put on sale and in which by pushing a rear end portion thereof in the axial direction this rear end portion is slid toward a pen tip thereof and, by this pushing operation, a pen core is drawn out from the pen tip. The rear end portion of the "sharp pen" unit 202 is fixed by a writing pressure transmission member 203. Also, a knock member 204 is fixed to a rear end of the writing pressure transmission member 203 through the intermediary of a variable capacitance capacitor 210. Part of a rear end of the variable capacitance capacitor 210 is checked by a rear end of a pen shaft 201, whereby it is arranged that when a writing pressure of pushing a pen tip has been applied thereto, the capacitor 210 is not moved backward. Also, the variable capacitance capacitor 210 is connected in parallel with a coil 207 wound around a fixed core fixed to a forward end of the pen shaft 201 to thereby construct a resonance circuit

In the above-constructed stylus pen, when pushing the knock member 204, the rear end of the "sharp pen" unit 202 is pushed through the variable capacitance capacitor 210 and writing pressure transmission member 203, whereby the pen core is drawn out from the pen tip of the "sharp pen" unit 202. On the other hand, when applying a writing pressure to the pen tip of the "sharp pen" unit 202, the variable capacitance capacitor 210 is pushed through the writing pressure transmission member 203, whereby the capacitance thereof is varied. Accordingly, since as explained in the construction of Fig. 15 the resonance frequency of the resonance circuit is varied by the writing pressure, on the coordinate reading device side it is possible to detect the status of the stylus pen according to the oscillation frequency.

However, in the conventional stylus pen, there were the following problems.
(1) In the stylus pen having the ball pen unit built therein, the ball pen unit is substantially fixed with respect to the pen shaft and had no such function of storing the pen tip within the pen shaft as is realised in a usual writing instrument.
(2) In the stylus pen having the "sharp pen" unit built therein, since the construction thereof is made such that an element for detecting a writing pressure is held between the "sharp pen" unit and the knock member, there was the problem that when knocking the knock member with the pen tip being kept in contact with the surface of the coordinate reading device, the status data was erroneously transmitted. The reason for this is considered to be attributed to the fact of the knocking mechanism as a writing instrument and the status detecting mechanism as the function of the coordinate reading device being operationally not separated from each other.

EP 0591083A discloses a user interface method and apparatus for a pen-based computing system. Modes of operation of a stylus and tablet apparatus are changed by clicking the erase end of the stylus.

JP 63286924A discloses an input pen for an electronic drafting device, in which a knock type electronic scaled control switch is provided at the rearmost end of the pen main body.

EP 0722150A relevant under article 54(3) EPC, discloses a stylus pen with a pressure sensitive function, in which a pressure sensitive element is arranged around a core unit so as to detect pressure applied to the core unit in the longitudinal direction of the pen. The core unit is a push and thrust type writing unit.

The present invention has been made in order to solve the above-mentioned problems that are inherent in the conventional stylus pen. And main objects thereof are:
(1) to realise a stylus pen having built therein the writing instrument such as a ball pen unit or "sharp pen" unit and having a function of drawing out the pen tip from the pen shaft and preventing status data from being erroneously transmitted even when the operation of drawing out the pen tip has been performed while the pen tip is being caused to indicate on the coordinate reading device.
   To state this more specifically,
(2) to realise a stylus pen having a ball pen unit built therein and having a function of storing the pen tip within the pen shaft and preventing status data from being erroneously transmitted even when the operation of drawing out the pen tip has been performed while the pen tip is being caused to indicate on the coordinate reading device. And,
(3) to realise a stylus pen having a "sharp pen" unit built therein and preventing status data from being erroneously transmitted even when the operation of drawing out the pen tip has been performed while the pen tip is being caused to indicate on the coordinate reading device.

According to the present invention, there is provided stylus pen comprising:
a pen shaft shaped like a writing instrument; and
a writing unit having a pen tip portion and a rear end portion, said writing unit being disposed in the pen shaft so that the pen tip portion and the rear end portion partly protrude from respective ends of the pen shaft; wherein
a core portion of the writing unit is caused to protrude from the pen tip end of the pen shaft when a pushing force is applied against a first spring means by pushing the rear end portion in the direction of the longitudinal axis of the pen toward said pen tip portion;
the whole writing unit is elastically slidable in the pen shaft against a second spring means when a writing pressure is applied by pushing the pen tip portion in the direction of the longitudinal axis of the pen toward said rear end portion;
the writing unit comprises a writing pressure transmission portion for transmitting the writing pressure in the direction of the longitudinal axis of the pen toward said rear end portion;
the first spring means is located between the pen tip portion and the rear end portion and the second spring means is located between the rear end of the pen shaft and the writing pressure transmission portion; and
a writing pressure detecting means is provided in such a manner as to contact the writing unit at the writing pressure transmission portion thereof and is provided so as to detect only the writing pressure without detecting the pushing force by setting the second spring means more flexible than the first spring means.

In order to attain the above objects, in a first detailed construction of the present invention as delineated above, there has been realised a stylus pen for use in a coordinate reading device, the stylus pen being provided with
(1) a pen shaft that is shaped like a writing instrument, and being characterised by further comprising;
(2) a writing instrument unit which is supported so that a pen tip portion thereof and a rear end portion thereof may partly protrude from the pen shaft respectively, and which is supported with respect to a pushing force of pushing the rear end portion of the writing instrument unit in an axial direction of the pen shaft so that the pen tip portion of the writing instrument unit may resist the pen shaft and which is supported with respect to a writing pressure of pushing the pen tip portion in the axial direction so that the writing instrument unit may be slidable and have elasticity, the writing instrument unit further having a writing pressure transmission portion provided for transmitting the writing pressure in the axial direction; and
(3) writing pressure detecting means which is provided in such a manner as to contact the writing instrument unit at the writing pressure transmission portion thereof and which is provided so as to detect only the writing pressure transmitted from the writing pressure transmission portion without receiving from the writing pressure transmission portion the pushing force of pushing the rear end portion of the writing instrument unit in the axial direction. Thus, the stylus pen is provided having the writing instrument built therein and having a function of drawing out the pen tip from the pen shaft and preventing status data from being erroneously transmitted even when an operation of drawing out the pen tip has been performed while the pen tip is being caused to indicate on the coordinate reading device.

Also, in a second detailed construction of the present invention, there has been realised a stylus pen for use in a coordinate reading device, the stylus pen being provided with:
(1) a pen shaft that is shaped like a writing instrument, and being characterised by further comprising;
(2) a knocking mechanical-pencil type "sharp pen" unit which is supported so that a pen tip portion thereof and a rear end portion thereof may partly protrude from the pen shaft respectively, the "sharp pen" unit having a pen-core drawout function of drawing out a pen core by pushing the rear end portion, and which is supported with respect to a pushing force of pushing the rear end portion of the "sharp pen" unit in the axial direction so that the pen tip portion thereof may resist the pen shaft and which is supported with respect to a writing pressure of pushing the pen tip portion of the "sharp pen" unit in the axial direction so that the "sharp pen" unit may be slidable and have elasticity, the "sharp pen" unit further having a writing pressure transmission portion provided for transmitting the writing pressure in the axial direction; and
(3) writing pressure detecting means which is provided in such a manner as to contact the "sharp pen" unit at the writing pressure transmission portion thereof and which is provided so as to detect only the writing pressure transmitted from the writing pressure transmission portion without receiving from the writing pressure transmission portion the pushing force of pushing the rear end portion of the "sharp pen" unit in the axial direction. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, in a third detailed construction of the present invention, there has been realised a stylus pen for use in a coordinate reading device, the stylus pen being provided with:
(1) a pen shaft that is shaped like a writing instrument, and characterised by further comprising;
(2) a knocking mechanical-pencil type "sharp pen" unit which is supported so that a pen tip portion thereof and a rear end portion thereof may partly protrude from the pen shaft respectively, the "sharp pen" unit having a pen-core drawout function of drawing out a pen core by pushing the rear end portion, and which is supported with respect to a pushing force of pushing the rear end portion of the "sharp pen" unit in the axial direction so that the pen tip portion thereof may resist the pen shaft, and which is supported with respect to a writing pressure of pushing the pen tip portion of the "sharp pen" unit in the axial direction so that the "sharp pen" unit may be slidable and have elasticity, the "sharp pen" unit further having a writing pressure transmission portion provided for transmitting the writing pressure in the axial direction;
(3) a writing pressure transmission member which is provided in such a manner as to contact the "sharp pen" unit at the writing pressure transmission portion thereof and which is provided so as to transmit only the writing pressure transmitted from the writing pressure transmission portion without receiving from the writing pressure transmission portion the pushing force of pushing the rear end portion of the "sharp pen" unit in the axial direction thereof; and
(4) writing pressure detecting means which is provided in contact with the writing pressure transmission member to thereby detect the writing pressure transmitted by the writing pressure transmission member. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, in a fourth detailed construction of the present invention, there has been realised a stylus pen for use in a coordinate reading device, the stylus pen being provided with:
(1) a pen shaft that is shaped like a writing instrument, and characterised by further comprising;
(2) a knocking mechanical-pencil type "sharp pen" unit which is supported so that a pen tip portion thereof may partly protrude from the pen shaft, the "sharp pen" unit having a pen-core drawout function of drawing out a pen core by pushing the rear end portion, and which is supported with respect to a pushing force of pushing the rear end portion of the "sharp pen" unit in the axial direction so that the pen tip portion thereof may resist the pen shaft, and which is supported with respect to a writing pressure of pushing the pen tip portion of the "sharp pen" unit in the axial direction so that the "sharp pen" unit may be slidable and have elasticity;
(3) a knock member having a rear end portion of the "sharp pen" unit secured thereto or detachable secured thereto, the knock member being provided so that a rear end portion thereof may partly protrude from the rear end portion of the pen shaft and having a writing pressure transmission portion provided for transmitting the writing pressure in the axial direction;
(4) a writing pressure transmission member which is provided in such a manner as to contact the knock member at the writing pressure transmission portion thereof and which is provided so as to transmit only the writing pressure transmitted from the writing pressure transmission portion without receiving from the writing pressure transmission portion the pushing force of pushing the rear end portion of the knock member in the axial direction; and
(5) writing pressure detecting means which is provided in contact with the writing pressure transmission member to thereby detect the writing pressure transmitted by the writing pressure transmission member. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, as a fifth construction prepared by further embodying the above constructions, there has been realised a stylus pen which is provided, in addition to the second construction, with:
(2) a coil coupled to the coordinate reading device; and, further as writing pressure detecting means, with:
(4) a movable core member which is provided in such a manner as to contact the "sharp pen" unit at the writing pressure transmission portion thereof and which is displaced restorably with respect to the coil by the writing pressure transmitted from the writing pressure transmission portion without receiving from the writing pressure transmission portion the pushing force of pushing the rear end portion of the "sharp pen" unit in the axial direction thereof so as to cause a change in the inductance of the coil by the displacement. Preferably, the moveable core member is made of a ferromagnetic body. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, as a sixth or seventh construction, there has been realised a stylus pen which is provided, in addition to the third or fourth construction, with:
(2) a coil coupled to the coordinate reading device; and, further as writing pressure detecting means, with:
(5) a movable core member, the movable core member being provided in such a manner as to be secured to the writing pressure transmission member, and which is displaced with respect to the coil when the writing pressure transmission member has been displaced by the writing pressure to thereby cause a change in the inductance of the coil. Preferably, the moveable core member is made of a ferromagnetic body. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, as an eighth construction, there has been realised a stylus pen which is provided, in addition to the second construction, with:
(2) a resonance circuit having at least a coil coupled to the coordinate reading device; and, further as writing pressure detecting means, with:
(4) a writing pressure detecting element which is connected to the resonance circuit and which is provided in such a manner as to contact the "sharp pen" unit at the writing pressure transmission portion thereof and which is provided so as to have its characteristic changed by the writing pressure transmitted from the writing pressure transmission portion without receiving from the writing pressure transmission portion the pushing force of pushing the rear end portion of the "sharp pen" unit in the axial direction. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, as a ninth or tenth construction, there has been realised a stylus pen which is provided, in addition to the third or fourth construction, with:
(2) a resonance circuit having at least a coil coupled to the coordinate reading device;
   and, further as writing pressure detecting means, with:
(5) a writing pressure detecting element which is connected to the resonance circuit and which is provided in such a manner as to contact the writing pressure transmission member and which is provided so as to have its characteristic changed by the writing pressure transmitted by the writing pressure transmission member. Thus, the stylus pen is provided having the "sharp pen" or mechanical pencil unit built therein and preventing status data from being erroneously transmitted even when an operation of drawing out the pen tip has been performed while the pen tip is being caused to indicate on the coordinate reading device.

Further, as an eleventh construction, there has been constructed in the eighth to tenth constructions a stylus pen by using a pressure detecting variable resistor as the pressure detecting element.

Further, as a twelfth construction, there has been constructed in the eighth to tenth constructions a stylus pen by using a variable capacitor, and in particular, a pressure detecting variable capacitor, as the pressure detecting element.

Further, as a thirteenth construction, there has been constructed in the second to twelfth constructions a stylus pen wherein a portion of the pen shaft which supports with respect to the pushing force of pushing the rear end portion of the "sharp pen" unit in the axial direction thereof the pen tip portion of the "sharp pen" unit so that this pen tip portion may resist the portion of the pen shaft is detachably fitted with respect to the remaining portion thereof.

Further, in a fourteenth construction, there has been realised a stylus pen for use in a coordinate reading device, the stylus pen being provided with:
(1) a pen shaft that is shaped like a writing instrument;
(2) a ball pen unit, and characterised by further comprising
(3) a drawout member which has a rear end of the ball pen unit secured thereto or detachably secured thereto, the drawout member being provided so that a rear end portion thereof may partly protrude from a rear end portion of the pen shaft, the drawout member having a function of moving back and forth the position of the ball pen unit as taken relative to the pen shaft by operating a rear end portion thereof, and which in a state where a pen tip portion of the ball pen unit is caused to protrude from the pen shaft by operation is supported with respect to a writing pressure of pushing the pen tip portion of the ball pen unit in the axial direction so that the drawout member may be slidable and have elasticity, the drawout member further having a writing pressure transmission portion provided for transmitting the writing pressure in the axial direction; and
(4) writing pressure detecting means which is provided in such a manner as to contact the drawout member at the writing pressure transmission portion thereof and which is provided so as to detect only the writing pressure transmitted from the writing pressure transmission portion without receiving from the writing pressure transmission portion the pushing force of pushing the rear end portion of the drawout member in the axial direction thereof. Thus, the stylus pen is provided having the ball pen unit built therein and having a function of storing the pen tip within the pen shaft and preventing status data from being erroneously transmitted even when an operation of drawing out the ball pen unit has been performed while the pen tip thereof is being caused to indicate on the coordinate reading device.

Further, as a fifteenth construction, there has been realised a stylus pen which is provided, in addition to the fourteenth construction, with:
(2) a coil coupled to the coordinate reading device;
   and, further as writing pressure detecting means, with:
(5) a movable core member which is provided in such a manner as to contact the drawout member at the writing pressure transmission portion thereof, and which is restorably displaced with respect to the coil by the writing pressure transmitted from the writing pressure transmission portion without receiving from the writing pressure transmission portion the pushing force of pushing the rear end portion of the drawout member in the axial direction thereof so as to cause a change in the inductance of the coil by this displacement. Preferably, the moveable core member is made of a ferromagnetic body. Thus, the stylus pen is provided having the ball pen unit built therein and having a function of storing the pen tip within the pen shaft and preventing status data from being erroneously transmitted even when an operation of drawing out the ball pen unit has been performed while the pen tip thereof is being caused to indicate on the coordinate reading device.

Further, as a sixteenth construction, there has been realised a stylus pen which is provided, in addition to the fourteenth construction, with:
(2) a coil coupled to the coordinate reading device;
   and, further as writing pressure detecting means, with:
(6) a movable core member which is provided in such a manner as to be secured to the writing pressure transmission member so that when the writing pressure transmission member has been displaced by the writing pressure, the movable core member may be displaced with respect to the coil to thereby cause a change in the inductance of the coil by this displacement. Preferably, the moveable core member is made of a ferromagnetic body. Thus, the stylus pen is provided having the ball pen unit built therein and having a function of storing the pen tip within the pen shaft and preventing status data from being erroneously transmitted even when an operation of drawing out the ball pen unit has been performed while the pen tip thereof is being caused to indicate on the coordinate reading device.

Further as a seventeenth construction, there has been realised a stylus pen which is provided, in addition to the fourteenth construction, with:
(2) a resonance circuit having at least a coil coupled to the coordinate reading device;
   and, further as writing pressure detecting means, with:
(5) a writing pressure detecting element which is connected to the resonance circuit and which is provided in such a manner as to contact the drawout member at the writing pressure transmission portion thereof, and which is provided so as to have its characteristic changed by the writing pressure transmitted from the writing pressure transmission portion without receiving from the writing pressure transmission portion the pushing force of pushing the rear end portion of the drawout member in the axial direction thereof. Thus, the stylus pen is provided having the ball pen unit built therein and having a function of storing the pen tip within the pen shaft and preventing status data from being erroneously transmitted even when an operation of drawing out the ball pen unit has been performed while the pen tip thereof is being caused to indicate on the coordinate reading device.

Further as an eighteenth construction, there has been realised a stylus pen which is provided, in addition to the fourteenth construction, with:
(2) a resonance circuit having at least a coil coupled to the coordinate reading device;
   and, further as writing pressure detecting means, with:
(6) a writing pressure detecting element which is connected to the resonance circuit and which is provided in such a manner as to contact the writing pressure transmission member and which is provided so as to have its characteristic changed by the writing pressure transmitted by the writing pressure transmission member. Thus, the stylus pen is provided having the ball pen unit built therein and having a function of storing the pen tip within the pen shaft and preventing status data from being erroneously transmitted even when an operation of drawing out the ball pen unit has been performed while the pen tip thereof is being caused to indicate on the coordinate reading device.

Further, as a nineteenth construction, there has been constructed in the seventeenth or eighteenth construction a stylus pen by using a pressure detecting variable resistor as the pressure detecting element.

Further, as a twentieth construction, there has been constructed in the seventeenth or eighteenth construction a stylus pen by using a variable capacitor, and in particular a pressure detecting variable capacitor, as the pressure detecting element.

Further, as a twenty first construction, there has been constructed in the fourteenth to twentieth constructions a stylus pen wherein the drawout member is a rotating type drawout member having a function of moving back and forth the position of the ball pen unit as taken relative to the pen shaft by rotating the rear end portion thereof about its axis.

Further, as a twenty second construction, there has been constructed in the fourteenth to twentieth constructions a stylus pen wherein the drawout member is a knocking type drawout member having a function of moving back and forth the position of the ball pen unit as taken relative to the pen shaft by pushing the rear end portion thereof about its axis.

Further, as a twenty third construction, there has been provided a stylus pen for use in a coordinate reading device, the stylus pen comprising:
a pen shaft shaped like a writing instrument, a writing instrument unit housed in the pen shaft, and characterised by further comprising writing pressure detecting means for detecting a pushing force of pushing a pen tip portion of the writing instrument unit in an axial direction without detecting the pushing force of pushing a rear end portion of the writing instrument unit in the axial direction.

Further, as a twenty fourth construction, there has been constructed in the fourteenth to twenty third constructions a stylus pen wherein the forward end portion of the pen shaft is detachably provided from a main body thereof.

Further, there has been constructed a coordinate reading system comprising the stylus pen of the present invention, a coordinate reading device having at least a plurality of sense lines that are disposed in each of *X* and *Y* directions, the device detecting the position indicated by the stylus pen according to an induction signal that is induced in the sense lines.

Embodiments of the invention will now be described, by way of example only, with reference to the accompanying diagrammatic figures, in which:
Fig. 1 is a constructional view illustrating a first embodiment of a stylus pen according to the present invention.
Fig. 2 presents views illustrating a "sharp pen" unit which is used in the first embodiment of the stylus pen according to the present invention.
Fig. 3 is a constructional view illustrating a second embodiment of the stylus pen according to the present invention.
Fig. 4 is a constructional view illustrating a third embodiment of the stylus pen according to the present invention.
Fig. 5 is a constructional view illustrating a fourth embodiment of the stylus pen according to the present invention.
Fig. 6 is a constructional view illustrating a fifth embodiment of the stylus pen according to the present invention.
Fig. 7 is a constructional view illustrating a sixth embodiment of a stylus pen which does not, however, form a part of the present invention.
Fig. 8 is a constructional view illustrating a seventh embodiment of the stylus pen according to the present invention.
Fig. 9 is a constructional view illustrating an eighth embodiment of the stylus pen according to the present invention.
Fig. 10 is a constructional view illustrating a ninth embodiment of the stylus pen according to the present invention.
Fig. 11 is a constructional view illustrating a tenth embodiment of the stylus pen according to the present invention.
Fig. 12 is a constructional view illustrating an eleventh embodiment of the stylus pen according to the present invention.
Fig. 13 is a constructional view illustrating a twelfth embodiment of the stylus pen according to the present invention.
Fig. 14 is a constructional view illustrating a thirteenth embodiment of the stylus pen according to the present invention.
Fig. 15 presents constructional views illustrating a conventional coordinate reading device and stylus pen, and,
Fig. 16 is a constructional view illustrating the conventional stylus pen.

An embodiment form of the present invention will now be explained with reference to the drawings.

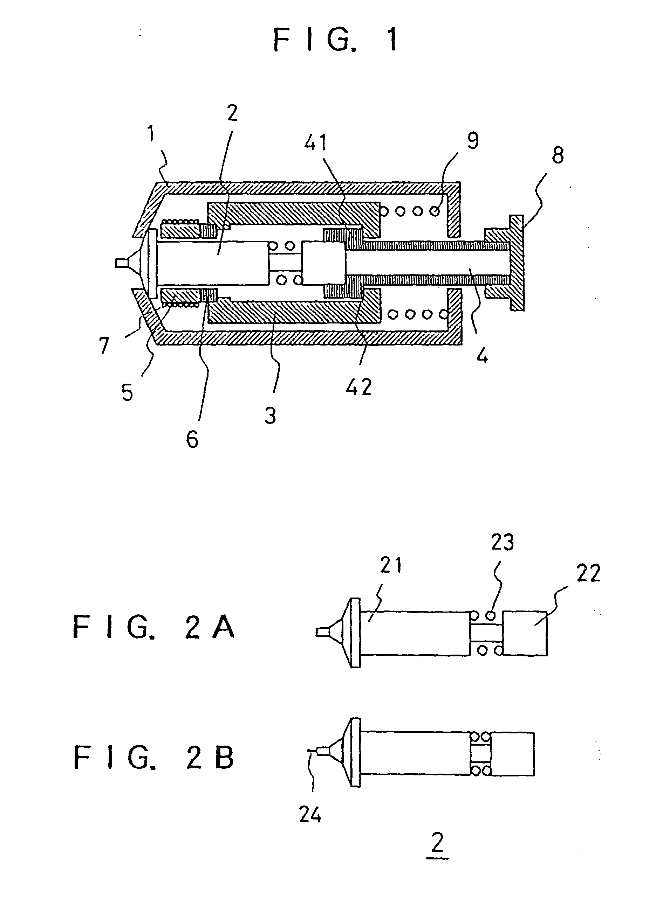

First, the basic construction of the stylus pen according to the present invention will now be explained with reference to Figs. 1 and 2. It is to be noted that although Fig. 1 is a view illustrating a section of the stylus pen, a part of the members is illustrated as an outer appearance view.

In Fig. 1, a pen shaft 1 is a casing that is shaped like an ordinary writing instrument, the casing having provided at a forward end thereof a hole permitting the passage therethrough of a pen tip of a "sharp pen" unit 2 as illustrated later and having provided at a rearward end thereof a hole permitting the passage therethrough of a knock member 4 as illustrated later. The forward end portion of the pen shaft 1 is provided fixedly with a fixed core 5 made of a ferromagnetic body such as ferrite. The fixed core 5 is provided with a hole which passes therethrough in its axial direction and has a coil 7 wound around an outer periphery thereof. Although not illustrated, a capacitor is connected in parallel with the coil 7 to thereby construct a resonance circuit. It is to be noted here that it may be arranged to either connect singly or plurally in parallel with the coil 7 a circuit that is prepared by connecting a switch and another capacitor in series with each other. Although in the following description for better understanding thereof reference will be made to a case where the resonance circuit is composed of the coil 7 and a single capacitor, the following explanation applies also to a case where a circuit that is prepared by connecting a switch and another capacitor in series with each other is further connected singly or plurally in parallel with the coil 7.

The "sharp pen" unit 2 is of a knocking type which is put on sale and, as illustrated in Fig. 2, is composed of a fixed portion 21 and a movable portion 22 and holds a knock spring 23 between the two. The movable portion 22 is shaped like a pipe whose rearward end portion is open. A pen core is supplied from this open end portion. When pushing the movable portion 22 toward the pen tip, it is arranged for the movable portion 22 to move and thereby cause the pen core 24 to be drawn out from the pen tip as illustrated in Fig. 2(B). When releasing the pushing force, the movable portion 22 is restored to its original state by the knock spring 23. The "sharp pen" unit 2 has its pen tip allowed to partly protrude from the hole provided at the forward end of the pen shaft 1 and also is supported by the periphery of the hole of the pen shaft 1 so that when knocking the movable portion 22 the fixed portion 21 thereof may be kept unmoved. Also, the rear end of the movable portion 22 of the "sharp pen" unit 2 is secured, or detachably secured, to the knock member 4.

The knock member 4 is a member that is shaped like a pipe and fixes the "sharp pen" unit 2 and has its rear end allowed to protrude from the hole provided in the rear end of the pen shaft 1. Further, a lid 8 is fitted over the rear end of the knock member 4. When supplying the pen core to the "sharp pen" unit 2, the lid member 8 is removed and the pen core is supplied from the rear end of the knock member 4. Part of the knock member 4 has a flange-shaped portion 41 provided thereon, whose rearward shoulder portion is used as a writing pressure transmission portion 42. This portion 42 serves to transmit the pushing force of pushing the pen tip of the "sharp pen" unit 2 in the axial direction thereof, namely a writing pressure thereof, by its shoulder portion to a member that is provided at a rearward position.

A writing pressure transmission member 3 is a member that is shaped like a cylinder. This member 3 permits the rearward end portion of the knock member 4 to pass there-through via a hole at a rear end thereof. Also, a movable core 6 is secured to the forward end portion of the member 3. The movable core 6 is made of a ferromagnetic body such as ferrite as in the case of the fixed core 5. A spring 9 is provided between the rear end of the writing pressure transmission member 3 and the rear end of the pen shaft 1 to thereby keep the writing pressure transmission member 3 to be urged at all times toward the pen tip. In an initial state, by this urging force of the spring, the movable core 6 is kept to cohere onto the fixed core 5. In this state, the coil 7 has an initial inductance value. Also, by the pushing force of the knock spring 23 of the "sharp pen" unit 2 pushing the knock member 4 rearward, in the initial state, the knock member 4 and the writing pressure transmission member 3 are kept in contact with each other by the writing pressure transmission portion 42. In order to keep this condition in the initial state, the rigidity and length of each of the knock spring 23 and spring 9 are set beforehand by being adjusted. Since it is wanted for the writing pressure transmission member 3 to be moved by the writing pressure, the spring 9 is set beforehand to be appreciably more highly flexible than the knock spring 23.

Next, the pen-core drawout operation will be explained. As has been already explained, when pushing the rear end of the knock member 4 in the axial direction, since the fixed portion 21 is supported by the periphery of the hole provided at the forward end of the pen shaft 1, the knock spring 23 become flexed with the result that the movable portion 22 is moved whereby the pen core 24 is drawn out. At this time, since no force is applied to the writing pressure transmission member 3, this member 3 is not moved, with the result that the movable core 6 is kept in close contact with the fixed core 5. Accordingly, the inductance of the coil 7 remains as it initially is and exhibits no variation. When releasing the knocking force, the knock member 4 is restored to its original position.

Next, the operation when a writing pressure has been applied will be explained. Since as stated previously the spring 9 is set to be more flexible than the knock spring 23, applying the writing pressure causes the "sharp pen" unit 2 and knock member 4 to be moved rearward as a whole. The maximum amount of this rearward movement is the distance between the flange portion of the pen tip of the "sharp pen" unit 2 and the fixed core 5. At this time, since the writing pressure transmission member 3 is contacted with the knock member 4 at the writing pressure transmission portion 42, the member 3 is simultaneously moved rearward, whereby the movable core 6 is moved in such a direction as to part away from the fixed core 5. By the movable core 6 parting from the fixed core 5, the inductance of the coil 7 varies so as to become small.

As mentioned above, according to this embodiment, the knocking operation does not cause the movement of the movable core 6 and therefore neither causes the variation in the inductance of the coil 7 nor causes the variation in the resonance frequency of the resonance circuit. On the other hand, applying the writing pressure causes the displacement of the movable core 6 in correspondence with the magnitude of the writing pressure, therefore causes the variation in the inductance of the coil 7, and also causes the variation in the resonance frequency of the resonance circuit. In this manner, it is possible to separate the knocking operation and the writing pressure detecting operation from each other.

In this manner, also as will be explained below, means for varying the resonance frequency of the resonance circuit in correspondence with the magnitude of the writing pressure is writing pressure detecting means.

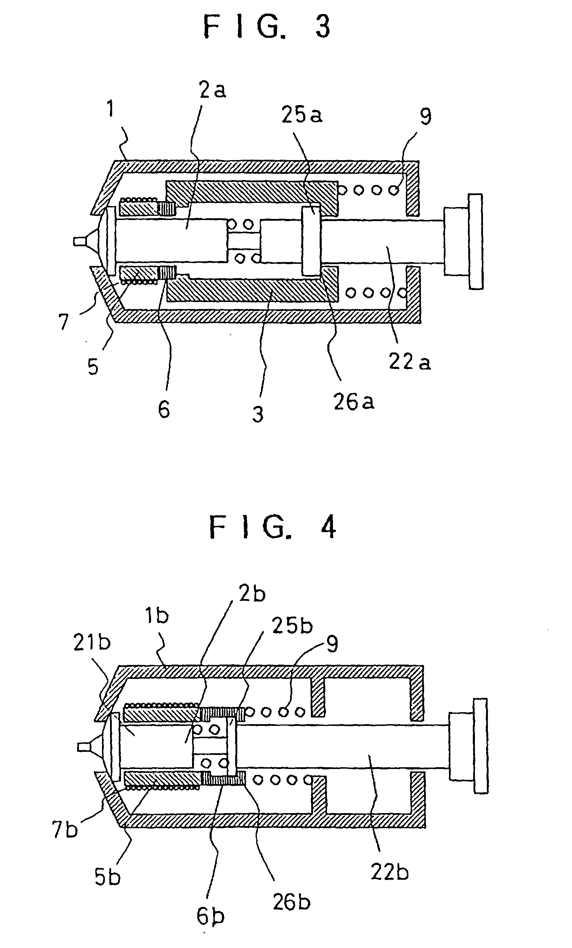

Assuming that the above-mentioned construction example be termed as a first embodiment, this first embodiment has had a construction that uses a commercially available "sharp pen" unit. However, if the "sharp pen" unit is made to be separately designable, the remaining members can be constructed by being integrated therewith. Next, these embodiments will be explained with reference to Figs. 3 and 4.

First, a second embodiment illustrated in Fig. 3 is an embodiment which has been constructed by integrating the knock member 4 of the first embodiment with the "sharp pen" unit 2. The movable portion 22a of the "sharp pen" unit 2a is extended and caused to protrude from the rear end portion of the pen shaft 1. On a portion of the movable portion 22a which is contained within the pen shaft 1 there is provided a flange 25a, the rearward shoulder portion of which is used as the writing pressure transmission portion 26a. The remaining members are the same as in the case of the first embodiment.

Next, a third embodiment illustrated in Fig. 4 is an embodiment having a construction which has omitted therefrom the writing pressure transmission member 3 of the first embodiment. This construction is executable when the length of the fixed core 5b can be lengthened and that of the fixed portion 21b of the "sharp pen" unit 2b can be shortened. The movable portion 22b of the "sharp pen" unit 2b is extended as in the case of the second embodiment and has the flange 25b provided at its forward end portion, the rearward shoulder portion of which is used as the writing pressure transmission portion 26b. Also, the movable core 6b has provided thereon a portion that contacts with the writing pressure transmission portion 26b so as to cause the rearward force to be transmitted to the movable core 6b. Since the members that move due to the writing pressure are provided at a forward zone of the pen shaft 1b, it is arranged either to provide midway in the interior of the pen shaft 1b a portion that supports the spring 9 or to use a lengthy spring as the spring 9 per se.

In the construction of each of these second and third embodiments, also, enabling the separation between the knocking operation and the writing pressure detecting operation is the same as in the case of the first embodiment.

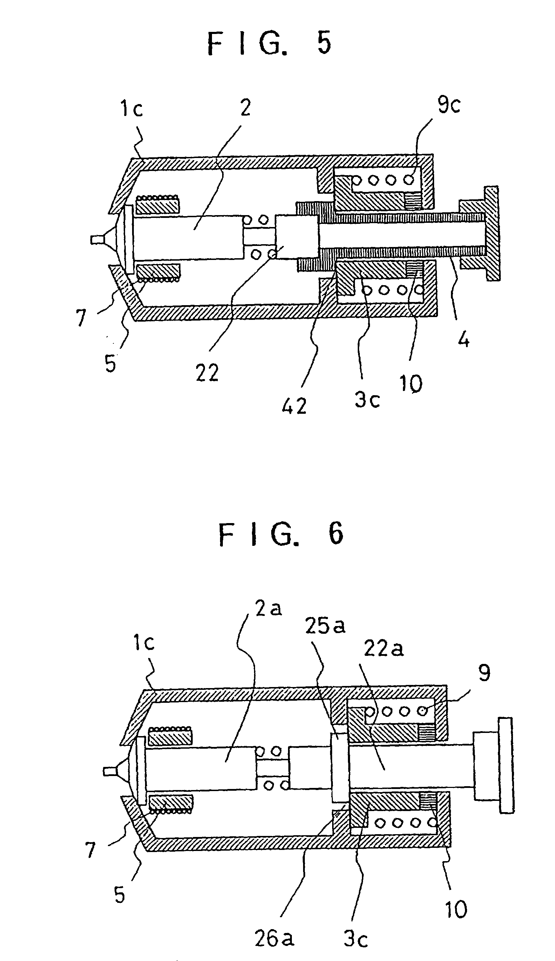

Although each of the first to third embodiments has been that wherein the coil inductance is varied by the writing pressure, it can be also arranged to use an element having its characteristic varied by receiving a force and connect this element to the resonance circuit to thereby transmit writing pressure data. As such an element, there are known a pressure detecting variable resistor and a pressure detecting variable capacitance capacitor. Next, embodiments of these elements will be explained with reference to Figs. 5 to 9.

First, a fourth embodiment illustrated in Fig. 5 will be explained. In this embodiment, the writing pressure transmission member 3c is provided between the writing pressure transmission portion 42 of the knock member 4 and the rear end portion of the pen shaft 1c. Further, a pressure sensitive resistance element 10 is held between the rear end of the writing pressure transmission member 3c and the rear end of the pen shaft 1c. As the pressure sensitive resistance element 10 there is put on sale a sheet-like one having a characteristic in which when no force is applied thereto a high resistance is exhibited thereby and as a gradually increasing force is applied thereto a gradually decreasing resistance value is exhibited thereby. This resistance element is used by being machined into the form of a ring. A flange is provided on a forward end portion of the writing pressure transmission member 3c and the spring 9c is provided between this flange and the rear end portion of the pen shaft 1c, whereby in the initial state the writing pressure transmission member 3c is pushed forward so as for no force to be applied to the pressure sensitive resistance element 10. At a position of the interior of the pen shaft 1c that opposes the flange provided on the writing pressure transmission member 3c there is provided a portion for regulating the forward movement of the writing pressure transmission member 3c. The remaining members are the same as in the case of the first embodiment.

Although not illustrated, the pressure sensitive resistance element 10 is connected in parallel with the resonance circuit constructed in such a manner as to include the coil 7 to thereby cause the variation in the Q value of the resonance circuit. Alternatively, a circuit consisting of a capacitor and the pressure sensitive resistance element 10 connected in series therewith is connected in parallel with the resonance circuit to thereby cause the variation in the resonance frequency.

In the construction of this fourth embodiment, when pushing the rear end of the knock member 4 in the axial direction, the movable portion 22 of the "sharp pen" unit 2 is moved whereby the pen core is drawn out. However, since this pushing force is not transmitted to the writing pressure transmission member 3c, this pushing force is also not applied to the pressure sensitive resistance element 10 whose resistance value is also not varied. On the other hand, the writing pressure is transmitted to the writing pressure transmission member 3c through the writing pressure transmission portion 42 of the knock member 4 to become a force for pushing the pressure sensitive resistance element 10. For this reason, the resistance value of the pressure sensitive resistance element 10 is varied in correspondence with the magnitude of the writing pressure. In this manner, in this construction, also, it is possible to separate the knocking operation and the writing pressure detecting operation from each other.

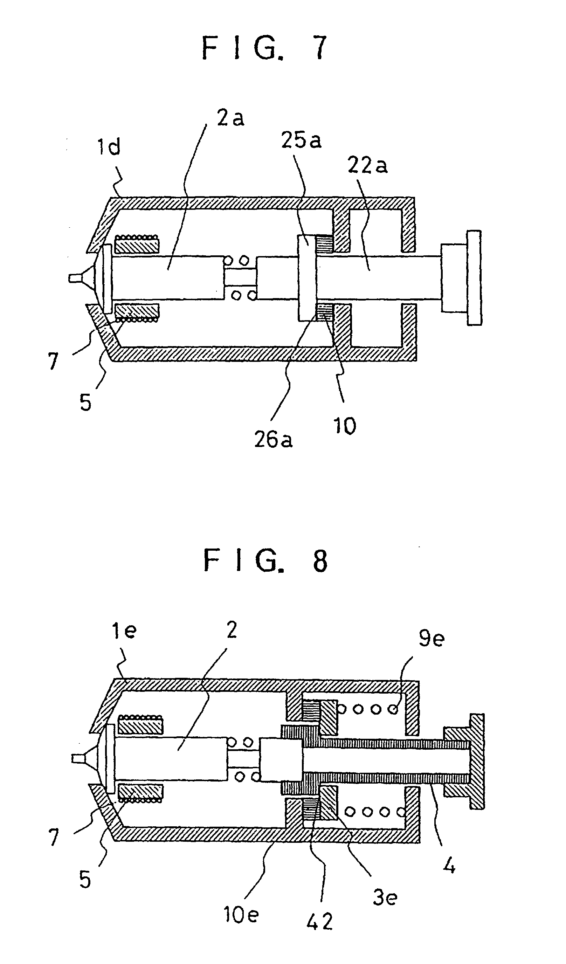

This fourth embodiment also has the freedom degree for designing illustrated in the second and third embodiments as viewed with respect to the first embodiment. A fifth embodiment illustrated in Fig. 6 corresponds to the second embodiment as viewed with respect to the first embodiment and in this fifth embodiment the "sharp pen" unit and the knock member are integrated with each other to provide a ''sharp pen" unit 2a. The writing pressure is transmitted to the writing pressure transmission member 3c through the writing pressure transmission portion 26a of flange 25a provided on the movable portion 22a of the "sharp pen" unit 2a and is further transmitted to the pressure sensitive resistance element 10. A sixth embodiment, which does not form part of the present invention, is illustrated in Fig. 7 and corresponds to the third embodiment as viewed with respect to the first embodiment and in this sixth embodiment there is omitted the provision of the writing pressure transmission member. The writing pressure is transmitted directly to the pressure sensitive resistance element 10 by the writing pressure transmission portion 26a of the flange 25a provided on the movable portion 22a of the "sharp pen" unit 2a.

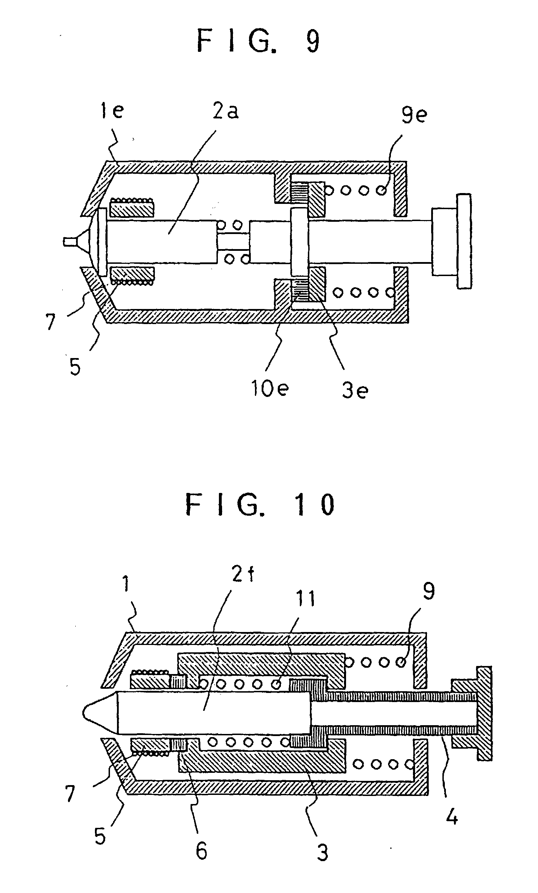

In the construction that uses the writing pressure detecting element, in addition to the construction wherein the writing pressure is detected as the compression force as illustrated in the preceding fourth to sixth embodiments, it can be also arranged to detect the writing pressure as the pull force. Next, embodiments that are relevant to this will be explained with reference to Figs. 8 and 9.

First, a seventh embodiment illustrated in Fig. 8 is explained. This seventh embodiment is an embodiment that has been prepared by re-constructing the fourth embodiment so as to detect the pull force. First, the ring-shaped writing pressure transmission member 3e is provided in such a manner as to contact with the writing pressure transmission portion 42 of the knock member 4 and at a forward position of the interior of the pen shaft 1e that opposes the writing pressure transmission member 3e there is provided a portion for regulating the forward movement of the writing pressure transmission member 3e. And the pressure sensitive resistance element 10e is held between this portion and the writing pressure transmission member 3e and secured by, for example, being adhered onto them both. Between the writing pressure transmission member 3e and the rear end of the pen shaft 1e there is provided the spring 9e so that in the initial state the writing pressure transmission member 3e may be urged forward so as for the compression force to be applied beforehand to the pressure sensitive resistance element 10e. The remaining members are the same as in the case of the first or fourth embodiment.

The operation of drawing out the pen core by pushing the rear end of the knock member 4 and the fact of this operation having no effect on the force applied to the pressure sensitive resistance element 10e are the same as in the case of the fourth embodiment. On the other hand, the writing pressure is transmitted to the writing pressure transmission member 3e through the writing pressure transmission portion 42 of the knock member 4 to become a pull force for pulling the pressure sensitive resistance element 10e. Since in the initial state the compression force was applied to the pressure sensitive resistance element 10e, the writing pressure acts to work so as to make this compression force small. In this manner, the resistance value of the pressure sensitive resistance element 10e varies in correspondence with the writing pressure. As in the case of the fourth embodiment, in this construction also, it is possible to separate the knocking operation and the writing pressure detecting operation from each other.

By the use of the "sharp pen" unit having the knock member integrated therewith, also, it is possible to construct in a way similar to that in the case of the seventh embodiment. This eighth embodiment is illustrated in Fig. 9. It is the same as the seventh embodiment excepting that the "sharp pen" unit 2a has been modified. In this construction also, the knocking operation can be separated from the writing pressure detecting operation.

In the construction of each of the above-explained fourth to eighth embodiments, it is possible to construct in the same way also by using even the pressure sensitive variable capacitance capacitor in place of the pressure sensitive resistance element. In this case, it is arranged, for example, to either connect the variable capacitance capacitor in parallel with the resonance circuit as it is or connect a circuit wherein a suitable resistor is connected in series with the variable capacitance capacitor to the resonance circuit in parallel therewith, to thereby cause the variation in the resonance frequency by the writing pressure.

Meanwhile, although in the above-mentioned embodiments reference has been made to the construction of containing the "sharp pen" unit as the writing instrument, it can be arranged to cause a ball pen unit to be contained without almost modifying these constructions.

First, a ninth embodiment having a ball pen unit contained therein with almost the same construction as in the case of the first embodiment illustrated in Fig. 1 is illustrated in Fig. 10. The ball pen unit 2f is used as a substitution for the above-mentioned "sharp pen" unit. At present, the "sharp pen" unit and ball pen unit having the same length and diameter are now put on sale so as to enable the mutual direct replacement between the two. The ball pen unit 2f is secured, or detachably secured, to the knock member 4. However, as illustrated in Fig. 1, in the case of the "sharp pen" unit 2, the diameter of the pen tip was made to be thick so that when having knocked, the fixed portion of the pen tip did not pop out from the forward end hole of the pen shaft 1. However, since the ball pen unit 2f used here is uniform in the thickness including the thickness of the diameter of the forward end thereof as well, if the diameter of the forward end of the pen shaft 1 is thicker than the diameter of the ball pen unit 2f, the ball pen unit 2f is freely moved forward jointly with the knock member 4. In order to avoid this inconvenience, it is structured either to make thin the diameter of the hole at the forward end of the pen shaft 1 or to provide a support spring 11 as illustrated in Fig. 10 so as to urge the ball pen unit 2f rearward. It is sufficient to add a small change in design to the structure of mounting the support spring, it being possible to use quite the same members as the remaining members.

Also, although in the explanation of the first embodiment of Fig. 1 the provision of the support spring 11 has been omitted, the support spring 11 used here may be provided beforehand in the first embodiment. That is, although in the first embodiment the knock spring 23 contained in the "sharp pen" unit 2 was used as the spring for playing the role to push the knock member 4 rearward, the support spring 11 for playing the role to push the knock member 4 rearward may be separately provided beforehand to thereby share this role. In the case having constructed in this manner, it is sufficient to perform exchange between the "sharp pen" unit and the ball pen unit, whereby the stylus pen can be made to be a stylus pen having compatibility between the two.

In the construction having the ball pen unit built therein, it is possible to construct a stylus pen which is provided with a drawout mechanism for drawing out the ball pen unit as in the case of a commercially available ball pen to thereby enable draw-in or draw-out of the forward end of the ball pen unit with respect to the pen shaft by the draw-in or draw-out operation and which enables the achievement of the object of the present invention that this drawout operation has no effect on the status detecting operation.

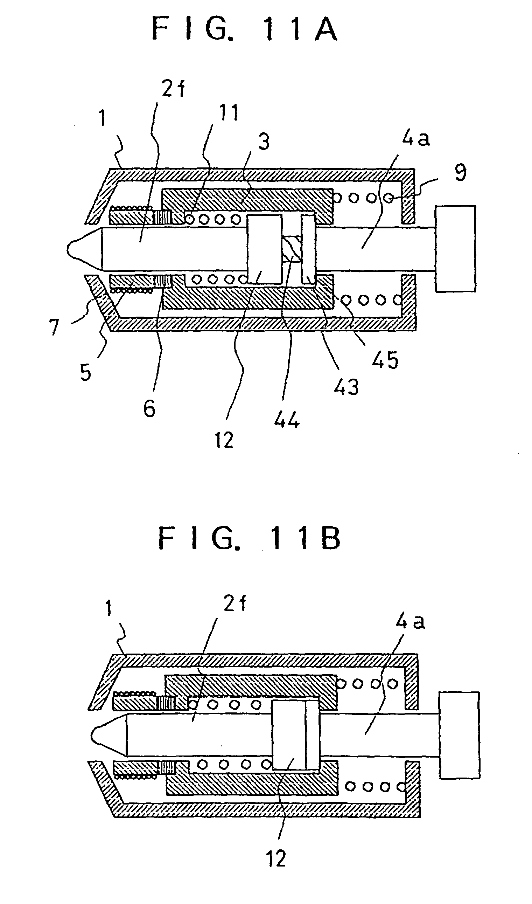

Fig. 11 illustrates a tenth embodiment that has been constructed in such a way. A rotating operation member 4a corresponds to the knock member. It has its rear end allowed to protrude and is intended to draw out the ball pen unit 2f by rotating the rear end portion of it. It is provided with a flange-shaped portion 43 for transmitting the writing pressure and a drawout screw 44 for realising the drawout function at its forward end position. The shoulder portion of the flange-shaped portion 43 is used as the writing pressure transmission portion 45 and this portion 43 acts to transmit the writing pressure by being contacted with the writing pressure transmission member 3.

The drawout member 12 has the ball pen unit 2f secured or detachably secured thereto at its forward end portion. In a rear end portion of the drawout member 12 there is provided a threaded portion that engages the drawout screw 44. Also, although not illustrated, it is structured to regulate the rotation of the drawout member 12 about an axis thereof. By this construction, when rotating the rotating operation member 4a, the drawout member 12 can be moved back and forth. Fig. 11(A) illustrates a state where the ball pen unit 2f is drawn out and the forward end portion thereof is thereby caused to protrude from the forward end of the pen shaft 1, and Fig. 11(B) illustrates a state where the drawout member 12 is retreated and the forward end portion thereof is thereby stored. The remaining members are the same as in the case of the construction having the "sharp pen" unit built therein.

In the stylus pen having the above-mentioned construction also, the structure for transmitting the writing pressure is the same as in the case of, for example, the first embodiment. Also, the operation for drawing out the ball pen unit 2f is not transmitted to the writing pressure transmission member 3 and only the writing pressure applied to the ball pen unit 2f is transmitted thereto.

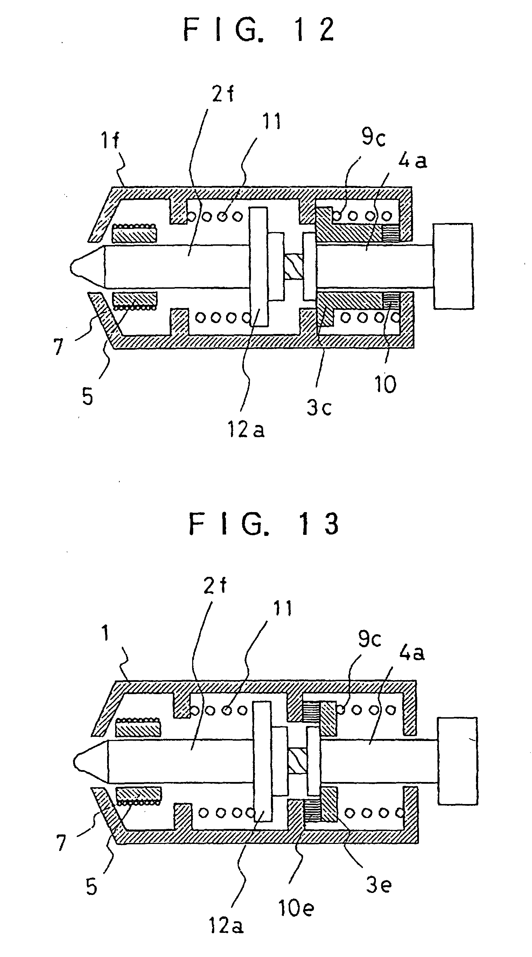

In even the construction having the ball pen unit built therein, the stylus pen can be realised using the pressure sensitive resistance element. An eleventh embodiment illustrated in Fig. 12 corresponds to the fourth embodiment illustrated in Fig. 5 and has a construction of compressing the pressure sensitive resistance element 10 by the writing pressure transmitted by the writing pressure transmission member 3c. The drawout member 12a is modified in shape from the eleventh embodiment and can thereby be supported by the support spring 11 provided between itself and the pen shaft 1f. Also, a twelfth embodiment illustrated in Fig. 13 corresponds to the seventh embodiment illustrated in Fig. 8 and has a construction of pulling the pressure sensitive resistance element 10e by the writing pressure transmitted by the writing pressure transmission member 3e. In these constructions also, the stylus pen can be similarly constructed using the pressure sensitive capacitance capacitor instead of the pressure sensitive resistance element.

It is to be noted that although in the above-mentioned tenth to twelfth embodiments the rotating operation has been utilised as the drawing-out mechanism, there is also the method of knocking the rear end of the pen and thereby drawing it out as the drawing-out mechanism. Therefore, the drawing-out mechanism may be constructed using any one of these conventional techniques. For example, in the tenth embodiment illustrated in Fig. 11, a combined unit of the drawout screw 44 and drawout member 12 may be also used as this knocking type drawing-out mechanism. In this case, in order to cause the drawout of the ball pen unit 2f, the rear end of the rotating operation member 4a is pushed in the axial direction. At this time, although the rotating operation member 4a is moved forward, this operation is not transmitted to the writing pressure transmission member 3 and therefore has no effect on the writing pressure detecting operation. As the essence of the present invention, it is sufficient that the relationship that no force which results from the drawing-out operation is transmitted to the writing pressure transmission member and only the force which results from the writing pressure is so done holds true between the drawing-out mechanism and the writing pressure transmission member.

The stylus pen having the ball pen unit built therein can also employ a constitution similar to the sixth and seventh embodiments illustrated in figures 7 and 8, in which a pressure transmission portion of the drawout member contacts the pressure sensitive member and transmits the writing pressure directly thereto.

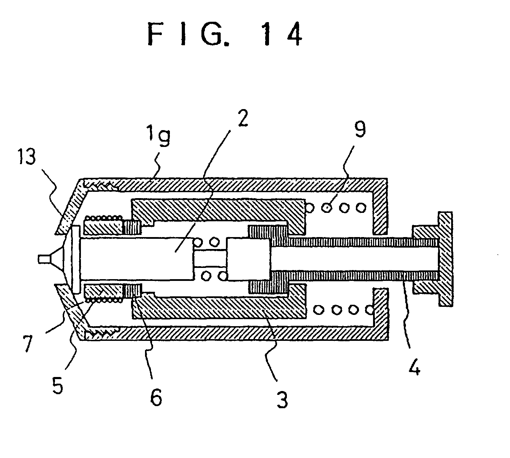

Referring now back to the construction using the "sharp pen" unit once again, as was explained in connection with the first embodiment illustrated in Fig. 1, the diameter of the hole at the forward end of the pen shaft was made smaller than that at the forward end portion of the "sharp pen" unit so as for the fixed portion of the pen tip not to move when the knocking operation has been performed. However, since if no modification is made the "sharp pen" unit cannot be demounted, there is inconveniently left the problem that in such a case as the "sharp pen" has become malfunctional, no replacement is possible, or that despite the construction of the present invention enabling concurrent use of the "sharp pen" unit employing construction and the ball pen unit employing construction, no replacement is possible. Also, although the coil 7 wound around the fixed core 5 is contained in the forward end portion of the stylus pen, even when a fail such as breakage of the coil wire has occurred, repair thereof is impossible if the forward end portion is secured. A thirteenth embodiment illustrated in Fig. 14 is constructed such that the forward end portion of the pen shaft 1g is provided separately as a cap 13. The pen shaft 1g and the cap 13 may be arranged to be interfitted with the use of threads. Also, the separation position is set to be a position enabling replacement of the "sharp pen" unit 2 or fixed core 5. The remaining members are the same as in the case of the first embodiment. Demounting the cap 13 under this construction enables replacement of the "sharp pen" unit. In the case of the coil 7 having been broken, also, repair is possible. The structure making the cap 13 separable as mentioned above is executable similarly in every one of the preceding embodiments.

Also, the stylus pen which has been explained in each of the above-mentioned embodiments is usable in the coordinate reading device illustrated in Fig. 15(B) or another coordinate reading device. That is, the coordinate reading device illustrated in Fig. 15(B) was the one having a construction wherein the X-direction and Y-direction scanning circuits are connected to the input and output of the amplifier respectively to thereby form the feedback oscillation circuit. However, in even the coordinate reading device which has a construction using no amplifier and having no feedback oscillation circuit therein, e.g., a construction wherein exciting means is provided and an excitation signal therefrom is applied to the Y-direction scanning circuit to thereby selectively excite the sense line disposed in the Y direction, whereby the coordinate indicated by the stylus pen is detected from the intensity distribution of an induction signal induced in the sense line disposed in the X direction and selected through the X-direction scanning circuit, the stylus pen of the present invention can be used.

As mentioned above, the stylus pen of the present invention can be used jointly with each of the coordinate reading devices of various types.

As has been explained above, there has been constructed a stylus pen for use in a coordinate reading device, the stylus pen being provided with:
(1) a pen shaft that is shaped like a writing instrument;
(2) a writing instrument unit which is supported so that a pen tip portion thereof and a rear end portion thereof may partly protrude from the pen shaft respectively, and which is supported with respect to a pushing force of pushing the rear end portion of the writing instrument unit in the axial direction so that the pen tip portion of the writing instrument unit may resist the pen shaft and which is supported with respect to a writing pressure of pushing the pen tip portion in the axial direction so that the writing instrument unit may be slidable and have elasticity, the writing instrument unit further having a writing pressure transmission portion provided for transmitting the writing pressure in the axial direction; and
(3) writing pressure detecting means which is provided in such a manner as to contact the writing instrument unit at the writing pressure transmission portion thereof and which is provided so as to detect only the writing pressure transmitted from the writing pressure transmission portion without receiving from the writing pressure transmission portion the pushing force of pushing the rear end portion of the writing instrument unit in the axial direction.

Also, in the present invention, there has been constructed a stylus pen by using the "sharp pen" unit or ball pen unit as the writing instrument unit and by providing, in the case of the ball pen unit, the drawout member having a function of storing the ball pen unit within the pen shaft by the operation thereof.

In the stylus pen having the above-mentioned construction, although as in the case of, for example, the operation of drawing out the pen core, the pushing force of pushing the rear end portion of the writing instrument in the axial direction is not transmitted from the writing pressure transmission portion to the writing pressure detecting means, the writing pressure of pushing the pen tip of the writing instrument unit in the axial direction is transmitted from the writing transmission portion to the writing pressure detecting means.

Accordingly, the following effects can be obtained by the present invention.
(1) It is possible to realise a stylus pen having built therein the writing instrument such as a ball pen unit or "sharp pen" unit and having a function of drawing out the pen tip from the pen shaft and preventing status data from being erroneously transmitted even when the operation of drawing out the pen tip has been performed while the pen tip is being caused to indicate on the coordinate reading device. More specifically,
(2) it is possible to realise a stylus pen having a ball pen unit built therein and having a function of storing the pen tip within the pen shaft and preventing status data from being erroneously transmitted even when the operation of drawing out the pen tip has been performed while the pen tip is being caused to indicate on the coordinate reading device, and,
(3) it is possible to realise a stylus pen having a "sharp pen" unit built therein and preventing status data from being erroneously transmitted even when the operation of drawing out the pen tip has been performed while the pen tip is being caused to indicate on the coordinate reading device.

Further, in the coordinate reading system which uses the stylus pen of the present invention jointly with a coordinate reading device, since the writing pressure of the stylus pen can be detected by the stylus pen of a simple structure without being accompanied by erroneous operations, it is possible to provide a coordinate reading system which is accurate and easy to use. Also, since a function of transmitting not only the writing pressure of the stylus pen but also the status from the stylus pen to the coordinate reading device can be added to the stylus pen of the present invention, it is possible to construct the coordinate reading system with no erroneous operations occurring at the writing-pressure detecting time without impairing the functions it had conventionally.

The aforegoing description has been given by way of example only and it will be appreciated by a person skilled in the art that modifications can be made without departing from the scope of the present invention.

## Claims

1. A stylus pen comprising:
a pen shaft (1) shaped like a writing instrument; and
a writing unit (2, 4) having a pen tip portion (2) and a rear end portion (4), said writing unit being disposed in the pen shaft so that the pen tip portion and the rear end portion partly protrude from respective ends of the pen shaft; wherein
a core poition of the writing unit is caused to protrude from the pen tip end of the pen shaft when a pushing force is applied against a first spring means (11, 23) by pushing the rear end portion in the direction of the longitudinal axis of the pen toward said pen tip portion;
the whole writing unit is elastically slidable in the pen shaft against a second spring means (9) when a writing pressure is applied by pushing the pen tip portion in the direction of the longitudinal axis of the pen toward said rear end portion;
the writing unit comprises a writing pressure transmission portion (42) for transmitting the writing pressure in the direction of the longitudinal axis of the pen toward said rear end portion;
the first spring means (11, 23) is located between the pen tip portion and the rear end portion and the second spring means (9) is located between the rear end of the pen shaft and the writing pressure transmission portion (42); and
a writing pressure detecting means (3,6) is provided in such a manner as to contact the writing unit at the writing pressure transmission portion (42) thereof and is provided so as to detect only the writing pressure without detecting the pushing force by setting the second spring means more flexible than the first spring means.

2. A stylus pen according to claim 1, wherein a rear end of the second spring means (9) abuts a supporting portion provided in the interior of the pen shaft.

3. A stylus pen according to claim 1 or claim 2 for use in a coordinate reading device, the coordinate reading device being intended, when a reading surface thereof is indicated by the stylus pen, to determine an indicated coordinate according to an induction signal induced in the coordinate reading device.

4. A stylus pen according to claim 3, further comprising:
a writing pressure transmission member (3) provided between the writing pressure transmission portion and the writing pressure detecting means in such a manner as to contact the writing unit at the writing pressure transmission portion thereof and to transmit only writing pressure transmitted from the writing pressure transmission portion to the writing pressure detecting means.

5. A stylus pen according to claim 4, wherein
the writing pressure transmission member is provided so as to be displaced restorably by the writing pressure transmitted from the writing pressure transmission portion, and
the writing pressure detecting means comprises:
a coil (7) coupled to the coordinate reading device, and
a movable core member (6b) secured to the writing pressure transmission member so as to be displaced with respect to the coil by the writing pressure transmitted from the writing pressure transmission portion and to be restored by the spring means thereby causing a change in the inductance of the coil by the displacement.

6. A stylus pen according to claim 4, wherein the writing pressure detecting means comprises:
a coil (7) coupled to the coordinate reading device, and wherein
the writing pressure transmission member is a movable core member (6b) provided in such a manner as to contact the writing unit at the writing pressure transmission portion thereof and provided so as to be displaced with respect to the coil by the writing pressure transmitted from the writing pressure transmission portion and to be restored by the spring means thereby causing a change in the inductance of the coil by the displacement.

7. A stylus pen according to claim 3, further comprising:
a resonance circuit (120) having at least a coil (7) coupled to the coordinate reading device,
wherein said writing pressure detecting means comprises a writing pressure detecting element (10) connected to the resonance circuit and provided in such a manner as to contact the writing unit at the writing pressure transmission portion, and
wherein the writing pressure detecting element detects writing pressure transmitted by the writing pressure transmission portion.

8. A stylus pen according to claim 4, further comprising:
a resonance circuit (120) having at least a coil (7) coupled to the coordinate reading device,
wherein said writing pressure detecting means further comprises a writing pressure detecting element (10) connected to the resonance circuit and provided in such a manner as to contact the writing pressure transmission element, and
wherein the writing pressure detecting element detects writing pressure transmitted by the writing pressure transmission portion.

9. A stylus pen according to claim 7 or claim 8, wherein the writing pressure detecting element is a pressure detecting variable resistor (10).

10. A stylus pen according to claim 7 or claim 8, wherein the writing pressure detecting element is a pressure detecting variable capacitor.

11. A stylus pen according to any one of the preceding claims, wherein
movement of the writing unit in said pen shaft is resisted by the pen shaft when said pushing force is applied; and
said writing unit is a mechanical pencil unit (21, 22) having a drawout function of drawing out the core portion (24) of the writing unit by applying the pushing force to the rear end portion.

12. A stylus pen according to claim 11, wherein
said rear end portion is a knock member (4) secured or detachably secured to a main body of the mechanical pencil unit, and
the writing pressure transmission portion (42) is provided on the knock member.

13. A stylus pen according to claim 11 or claim 12, wherein a portion (13) of the pen shaft which resists movement of the writing unit when said pushing force is applied is detachably fitted with respect to the remaining portion (1g) thereof.

14. A stylus pen according to any one of the preceeing claims, wherein:
the writing unit is a ball pen unit (2f) and said rear end portion is a drawout member (4a) secured or detachably secured to a main body of the ball pen unit;
the pen tip portion of the ball pen unit is the core portion of the ball pen unit;
a rear end portion of the drawout member is adapted to be operated such that the main body of the ball pen unit is moved back and forth relative to the pen shaft by means of the pushing force, whereby the pen tip portion of the ball pen unit is retractable into the pen shaft; and
the writing pressure transmission portion (45) is provided on the drawout member.

15. A stylus pen according to claim 14, wherein the drawout member is a rotating type drawout member whereby the main body of the ball pen unit is moved back and forth relative to the pen shaft by rotating said drawout member about its longitudinal axis.

16. A stylus pen according to claim 14, wherein the drawout member is a knocking type drawout member whereby the main body of the ball pen unit is moved back and forth relative to the pen shaft by pushing the rear end portion of the drawout member in the direction of the longitudinal axis of the pen shaft.

17. A coordinate reading system comprising:
a stylus pen according to any one of the preceding claims; and
a coordinate reading device having at least a plurality of sense lines disposed in each of X and Y directions and a detecting means for detecting a position indicated by the stylus pen according to an induction signal induced in the sense lines.

## Patentansprüche

1. Taststift, umfassend:
einen Stiftschaft (1), der wie ein Schreibinstrument geformt ist; und
eine Schreibeinheit (2, 4) mit einem Stiftspitzenabschnitt (2) und einem hinteren Endabschnitt (4), wobei die Schreibeinheit im Stiftschaft angeordnet ist, so daß der Stiftspitzenabschnitt und der hintere Endabschnitt teilweise aus den jeweiligen Enden des Stiftschaftes hervorstehen; wobei
ein Kernabschnitt der Schreibeinheit veranlaßt wird, aus dem Stiftspitzenende des Stiftschaftes hervorzustehen, wenn eine Schubkraft gegen ein erstes Federmittel (11, 23) ausgeübt wird durch Verschieben des hinteren Endabschnitts in Richtung der Längsachse des Stiftes zum Stiftspitzenabschnitt;
die gesamte Schreibeinheit elastisch im Stiftschaft gegen ein zweites Federmittel (9) verschiebbar ist, wenn ein Schreibdruck ausgeübt wird durch Verschieben des Stiftspitzenabschnitts in Richtung der Längsachse des Stiftes zum hinteren Endabschnitt;
die Schreibeinheit einen Schreibdruckübertragungsabschnitt (42) umfaßt zum Übertragen des Schreibdrucks in Richtung der Längsachse des Stifts zum hinteren Endabschnitt;
das erste Federmittel (11, 23) zwischen dem Stiftspitzenabschnitt und dem hinteren Endabschnitt angeordnet ist und das zweite Federmittel (9) zwischen dem hinteren Ende des Stiftschaftes und dem Schreibdruckübertragungsabschnitt (42) angeordnet ist; und
ein Schreibdruckerfassungsmittel (3, 6) so angeordnet ist, daß es die Schreibeinheit am Schreibdruckübertragungsabschnitt (42) derselben berührt und so angeordnet ist, daß es nur den Schreibdruck erfaßt, ohne die Schubkraft zu erfassen, indem das zweite Federmittel flexibler eingestellt ist als das erste Federmittel.

2. Taststift nach Anspruch 1, bei dem ein hinteres Ende des zweiten Federmittels (9) an einem Unterstützungsabschnitt anliegt, der im Inneren des Stiftschaftes vorgesehen ist.

3. Taststift nach Anspruch 1 oder Anspruch 2 für die Verwendung in einer Koordinatenlesevorrichtung, wobei die Koordinatenlesevorrichtung dann, wenn mit dem Taststift auf eine Leseoberfläche derselben gezeigt wird, eine angezeigte Koordinate ermitteln soll entsprechend einem Induktionssignal, das in der Koordinatenlesevorrichtung induziert wird.

4. Taststift nach Anspruch 3, ferner umfassend:
ein Schreibdruckübertragungselement (3), das zwischen dem Schreibdruckübertragungsabschnitt und dem Schreibdruckerfassungsmittel vorgesehen ist, derart, daß es die Schreibeinheit an deren Schreibdruckübertragungsabschnitt berührt und nur den Schreibdruck, der vom Schreibdruckübertragungsabschnitt übertragen wird, zum Schreibdruckerfassungsabschnitt überträgt.

5. Taststift nach Anspruch 4, bei dem
das Schreibdruckübertragungselement so angeordnet ist, daß es umkehrbar verschoben wird durch den Schreibdruck, der vom Schreibdruckübertragungsabschnitt übertragen wird, und
das Schreibdruckerfassungsmittel umfaßt:
eine Spule (7), die mit der Koordinatenlesevorrichtung verbunden ist, und
ein bewegliches Kemelement (6b), das am Schreibdruckübertragungselement befestigt ist, um bezüglich der Spule verschoben zu werden durch den vom Schreibdruckübertragungsabschnitt übertragenen Schreibdruck, und um durch das Federmittel zurückgestellt zu werden, wodurch eine Änderung der Induktivität der Spule durch die Verschiebung hervorgerufen wird.

6. Taststift nach Anspruch 4, bei dem das Schreibdruckerfassungsmittel umfaßt:
eine Spule (7), die mit der Koordinatenlesevorrichtung verbunden ist,
wobei
das Schreibdruckübertragungselement ein bewegliches Kernelement (6b) ist, das so angeordnet ist, daß es die Schreibeinheit am Schreibdruckübertragungsabschnitt derselben berührt, und so angeordnet ist, daß es bezüglich der Spule durch den vom Schreibdruckübertragungsabschnitt übertragenen Schreibdruck verschoben wird und durch das Federmittel zurückgestellt wird, wodurch eine Änderung der Induktivität der Spule mittels der Verschiebung hervorgerufen wird.

7. Taststift nach Anspruch 3, ferner umfassen:
eine Resonanzschaltung (120) mit wenigstens einer Spule (7), die mit der Koordinatenlesevorrichtung verbunden ist,
wobei das Schreibdruckerfassungsmittel ein Schreibdruckerfassungselement (10) umfaßt, das mit der Resonanzschaltung verbunden ist und so angeordnet ist, daß es die Schreibeinheit am Schreibdruckübertragungsabschnitt berührt, und
wobei das Schreibdruckerfassungselement den vom Schreibdruckübertragungsabschnitt übertragenen Schreibdruck erfaßt.

8. Taststift nach Anspruch 4, femer umfassend:
eine Resonanzschaltung (120) mit wenigstens einer Spule (7), die mit der Koordinatenlesevorrichtung verbunden ist,
wobei das Schreibdruckerfassungsmittel femer ein Schreibdruckerfassungselement (10) umfaßt, das mit der Resonanzschaltung verbunden ist und so angeordnet ist, daß es das Schreibdruckübertragungselement berührt, und
wobei das Schreibdruckerfassungselement den vom Schreibdruckübertragungsabschnitt übertragenen Schreibdruck erfaßt.

9. Taststift nach Anspruch 7 oder Anspruch 8, bei dem das Schreibdruckerfassungselement ein druckerfassender veränderlicher Widerstand (10) ist.

10. Taststift nach Anspruch 7 oder Anspruch 8, bei dem das Schreibdruckerfassungselement ein druckerfassender veränderlicher Kondensator ist.

11. Taststift nach irgendeinem der vorangehenden Ansprüche, bei dem
der Bewegung der Schreibeinheit im Stiftschaft durch den Stiftschaft Widerstand entgegengesetzt wird, wenn die Schubkraft ausgeübt wird; und
die Schreibeinheit eine mechanische Zeichenstifteinheit (21, 22) ist, die eine Ausziehfunktion zum Ausziehens des Kernabschnitts (24) der Schreibeinheit durch Ausüben der Schubkraft auf den hinteren Endabschnitt aufweist.

12. Taststift nach Anspruch 11, bei dem
der hintere Endabschnitt ein Schlagelement (4) ist, das am Hauptkörper der mechanischen Schreibstifteinheit befestigt oder abnehmbar befestigt ist, und
der Schreibdruckübertragungsabschnitt (42) am Schlagelement angeordnet ist.

13. Taststift nach Anspruch 11 oder Anspruch 12, bei dem ein Abschnitt (13) des Stiftschaftes, der der Bewegung der Schreibeinheit Widerstand entgegensetzt, wenn die Schubkraft ausgeübt wird, bezüglich dessen Restabschnitt (1g) abnehmbar eingesetzt ist.

14. Taststift nach irgendeinem der vorangehenden Ansprüche, bei dem:
die Schreibeinheit eine Kugelschreibereinheit (2f) ist und der hintere Endabschnitt ein Ausziehelement (4a) ist, das am Hauptkörper der Kugelschreibereinheit befestigt oder abnehmbar befestigt ist;
der Stiftspitzenabschnitt der Kugelschreibereinheit der Kemabschnitt der Kugelschreibereinheit ist;
ein hinterer Endabschnitt des Ausziehelements dafür konfiguriert ist, so betätigt zu werden, daß der Hauptkörper der Kugelschreibereinheit mittels der Schubkraft bezüglich des Stiftschaftes vor und zurück bewegt wird, wodurch der Stiftspitzenabschnitt der Kugelschreibereinheit in den Stiftschaft zurückziehbar ist; und
der Schreibdruckübertragungsabschnitt (45) am Ausziehelement vorgesehen ist.

15. Taststift nach Anspruch 14, bei dem das Ausziehelement ein Rotationstyp-Ausziehelement ist, wobei der Hauptkörper der Kugelschreibereinheit bezüglich des Stiftschaftes vor und zurück bewegt wird durch Drehen des Ausziehelements um seine Längsachse.

16. Taststift nach Anspruch 14, bei dem das Ausziehelement ein Schlagtyp-Ausziehelement ist, wobei der Hauptkörper der Kugelschreibereinheit bezüglich des Stiftschaftes vor und zurück bewegt wird durch Schieben des hinteren Endabschnitts des Ausziehelements in Richtung der Längsachse des Stiftschaftes.

17. Koordinatenlesesystem, umfassend:
einen Taststift nach irgendeinem der vorangehenden Ansprüche; und
eine Koordinatenlesevorrichtung mit wenigstens mehreren Sensorleitungen, die jeweils in X- und Y-Richtung angeordnet sind, und einem Erfassungsmittel zum Erfassen einer vom Taststift angezeigten Position entsprechend einem in den Sensorleitungen induzierten Induktionssignal.

## Revendications

1. Crayon stylet comprenant :
un manche de crayon (1) de la forme d'un instrument d'écriture ; et
une unité d'écriture (2, 4) composée d'une partie de pointe de crayon (2) et d'une partie d'extrémité arrière (4), ladite unité d'écriture étant disposée dans le manche de crayon de façon à ce que la partie de pointe de crayon et la partie d'extrémité arrière dépassent partiellement de chaque extrémité respective du manche de crayon ; dans lequel
une partie centrale de l'unité d'écriture dépasse de l'extrémité de pointe de crayon du manche de crayon lorsqu'une poussée est exercée contre un premier ressort (11, 23) en poussant la partie d'extrémité arrière suivant l'axe longitudinal du crayon en direction de ladite partie de pointe de crayon ;
l'unité d'écriture dans son intégralité peut glisser de manière élastique à l'intérieur du manche de crayon contre un second ressort (9) lorsqu'une pression d'écriture s'exerce en poussant la partie de pointe de crayon suivant l'axe longitudinal du crayon dans la direction de ladite partie d'extrémité amère ;
l'unité d'écriture comprend une partie de transmission de pression d'écriture (42) pour transmettre la pression d'écriture suivant l'axe longitudinal du crayon dans la direction de ladite partie d'extrémité arrière ;
le premier ressort (11, 23) est situé entre la partie de pointe de crayon et la partie d'extrémité arrière et le second ressort (9) est situé entre l'extrémité arrière du manche de crayon et la partie de transmission de pression d'écriture (42) ; et
un dispositif de détection de pression d'écriture (3, 6) est placé de manière à entrer en contact avec l'unité d'écriture au niveau de la partie de transmission de pression d'écriture (42) et est conçu pour pouvoir détecter uniquement la pression d'écriture sans détecter la poussée grâce à une flexibilité plus grande du second ressort par rapport à celle du premier ressort.

2. Crayon stylet selon la revendication 1, dans lequel l'extrémité arrière du second ressort (9) est contiguë à une partie porteuse placée à l'intérieur du manche de crayon.

3. Crayon stylet selon la revendication 1 ou la revendication 2 à utiliser dans un système de lecture de coordonnées, le système de lecture de coordonnées étant conçu, lorsqu'une surface de lecture est indiquée par le crayon stylet, pour déterminer une coordonnée indiquée en fonction d'un signal d'induction induit dans le système de lecture de coordonnées.

4. Crayon stylet selon la revendication 3, comprenant en outre :
un élément de transmission de pression d'écriture (3) placé entre la partie de transmission de pression d'écriture et le dispositif de détection de pression d'écriture de manière à entrer en contact avec l'unité d'écriture au niveau de la partie de transmission de pression d'écriture et de transmettre uniquement la pression d'écriture transmise depuis la partie de transmission de pression d'écriture vers le dispositif de détection de pression d'écriture.

5. Crayon stylet selon la revendication 4, dans lequel
l'élément de transmission de pression d'écriture est situé de manière à être provisoirement déplacé par la pression d'écriture transmise depuis la partie de transmission de pression d'écriture, et
le dispositif de détection de pression d'écriture comprend :
une bobine (7) couplée au système de lecture de coordonnées, et
un élément central mobile (6b) fixé à l'élément de transmission de pression d'écriture de manière à être déplacé par rapport à la bobine par la pression d'écriture transmise depuis la partie de transmission de pression d'écriture et à être replacé par le ressort, engendrant ainsi par ce déplacement une modification dans l'inductance de la bobine.

6. Crayon stylet selon la revendication 4, dans lequel le dispositif de détection de pression d'écriture comprend:
une bobine (7) couplée au système de lecture de coordonnées, et dans lequel
l'élément de transmission de pression d'écriture est un élément central mobile (6b) placé de manière à entrer en contact avec l'unité d'écriture au niveau de la partie de transmission de pression d'écriture et situé de manière à être déplacé par rapport à la bobine par la pression d'écriture transmise depuis la partie de transmission de pression d'écriture et à être replacé par le ressort, engendrant ainsi par ce déplacement une modification dans l'inductance de la bobine.

7. Crayon stylet selon la revendication 3, comprenant en outre :
un circuit de résonance (120) disposant au minimum d'une bobine (7) couplée au système de lecture de coordonnées,
dans lequel ledit dispositif de détection de pression d'écriture comprend un élément de détection de pression d'écriture (10) connecté au circuit de résonance et placé de manière à entrer en contact avec l'unité d'écriture au niveau de la partie de transmission de pression d'écriture, et
dans lequel l'élément de détection de pression d'écriture détecte la pression d'écriture transmise par la partie de transmission de pression d'écriture.

8. Crayon stylet selon la revendication 4, comprenant en outre :
un circuit de résonance (120) composé au minimum d'une bobine (7) couplée au système de lecture de coordonnées,
dans lequel ledit dispositif de détection de pression d'écriture comprend en outre un élément de détection de pression d'écriture (10) connecté au circuit de résonance et placé de manière à entrer en contact avec l'élément de transmission de pression d'écriture, et
dans lequel l'élément de détection de pression d'écriture détecte la pression d'écriture transmise par la partie de transmission de pression d'écriture.

9. Crayon stylet selon la revendication 7 ou la revendication 8, dans lequel l'élément de détection de pression d'écriture est une résistance variable de détection de pression (10).

10. Crayon stylet selon la revendication 7 ou la revendication 8, dans lequel l'élément de détection de pression d'écriture est un condensateur variable de détection de pression.

11. Crayon stylet selon l'une des revendications précédentes, dans lequel
le manche de crayon s'oppose au mouvement de l'unité d'écriture dans ledit manche de crayon lorsque ladite poussée est exercée ; et
ladite unité d'écriture est un porte-mine (21, 22) disposant d'une fonction de rétraction pour sortir ou rentrer la partie centrale (24) de l'unité d'écriture en exerçant une poussée sur la partie d'extrémité arrière.

12. Crayon stylet selon la revendication 11, dans lequel
ladite partie d'extrémité arrière est un élément poussoir (4) fixé de manière amovible ou non au corps principal du porte-mine, et
la partie de transmission de pression d'écriture (42) est placée sur l'élément poussoir.

13. Crayon stylet selon la revendication 11 ou la revendication 12, dans lequel une partie (13) du manche de crayon qui s'oppose au mouvement de l'unité d'écriture lorsque ladite poussée est exercée est fixée de manière amovible par rapport à la partie restante (1g).

14. Crayon stylet selon l'une des revendications précédentes, dans lequel :
l'unité d'écriture est un stylo bille (2f) et ladite partie d'extrémité arrière est un élément de rétraction (4a) fixé de manière amovible ou non au corps principal du stylo bille ;
la partie de pointe de crayon du stylo bille est la partie centrale du stylo bille ;
une partie d'extrémité arrière de l'élément de rétraction est conçue pour être utilisée de façon à ce que le corps principal du stylo bille se déplace d'avant en arrière par rapport au manche de crayon grâce à la poussée, permettant à la partie de pointe de crayon du stylo bille de se rétracter dans la manche de crayon ; et
la partie de transmission de pression d'écriture (45) est placée sur l'élément de rétraction.

15. Crayon stylet selon la revendication 14, dans lequel l'élément de rétraction est un élément de type rotatif grâce auquel le corps principal du stylo bille se déplace d'avant en arrière par rapport au manche de crayon par rotation du dit élément de rétraction autour de son axe longitudinal.

16. Crayon stylet selon la revendication 14, dans lequel l'élément de rétraction est un élément de type poussoir grâce auquel le corps principal du stylo bille se déplace d'avant en arrière par rapport au manche de crayon par poussée de la partie d'extrémité arrière de l'élément de rétraction suivant la direction de l'axe longitudinal du manche de crayon.

17. Système de lecture de coordonnées comprenant :
un crayon stylet selon l'une des revendications précédentes ; et
un dispositif de lecture de coordonnées possédant au minimum une pluralité de fils de lecture disposés dans chacune des directions X et Y et un dispositif de détection pour détecter une position indiquée par le crayon stylet en fonction d'un signal d'induction induit dans les lignes de détection.
